# EUROPÄISCHE PATENTSCHRIFT

(11) **EP 1 281 447 B1**
(45) Veröffentlichungstag und Bekanntmachung des Hinweises auf die Patenterteilung: **23.08.2006**
(21) Anmeldenummer: 02006147.9
(22) Anmeldetag: 19.03.2002
(51) Int. Cl.: B08B 9/42

(54) **Flaschenzellenträger sowie Flaschenkorb mit einem solchen Träger**
Bottle cell holder and bottle crate with such a holder
Support de cellules pour bouteilles et panier pour bouteilles avec un tel support

(30) Priorität: 31.07.2001 DE 10137391
(43) Veröffentlichungstag der Anmeldung: 05.02.2003
(73) Patentinhaber: KHS AG, 44143 Dortmund (DE)
(72) Erfinder: Jendrichowski, Klaus, 59735 Holzwickede (DE); Elmar, Hein, 44359 Dortmund (DE)

(56) Entgegenhaltungen:
- DE-A- 3 201 881
- DE-B- 1 047 655
- DE-C- 235 939
- GB-A- 1 208 829

## Beschreibung

Die Erfindung bezieht sich auf einen Flaschenzellenträger gemäß Oberbegriff Patentanspruch 1 sowie auf einen Flaschenkorb gemäß Oberbegriff Patentanspruch 28.

Flaschenkörbe für Flaschenreinigungsmaschinen sind in unterschiedlichen Ausführungen bekannt und dienen in einer Flaschenreinigungsmaschine, in der eine Vielzahl von Flaschenkörben an einem in einem Gehäuse dieser Maschine umlaufenden Transporteur vorgesehen sind, zur Aufnahme von Flaschen während des Reinigungsvorgangs, d.h. die Flaschen werden mit den Flaschenkörben durch verschiedene Behandlungs- oder Reinigungszonen bewegt und dort mit unterschiedlichen Reinigungsflüssigkeiten (Lauge, Wasser usw.) bei unterschiedlichen Temperaturen in der dem Fachmann bekannten Weise behandelt.

Bekannte Flaschenkörbe bestehen aus einem Flaschenzellenträger, der aus einem korrosionsbeständigen Material mit ausreichend hoher Tragfestigkeit, beispielsweise aus korrosionsbeständigem Stahl hergestellt ist, sowie aus in die Flaschenzellenträger eingesetzten und dort befestigten Flaschenzellen, die beispielsweise als Spritzgießteile aus Kunststoff gefertigt sind.

Durch die GB 1208829 wurde ein aus einem Blechkörper gebildeter Flaschenkorb vorgestellt, wobei dieser Blechkörper die Querschnittsfläche eines oben offenen, abgeflachten Sechsecks mit parallelen Ober- und Unterseiten aufweist.

Zielsetzung dieser Ausgestaltung war es, eine einwandfreien Zentrierung der Flaschenzellenmündungen und eine größere Biegungssteifigkeit der Flaschenkörbe zu erzielen: Dementsprechend ist der vorgestellte Flaschenkorb vergleichsweise massiv ausgeführt. Die, wegen ihres Flächenträgheitsmomentes, für die gewünschte größere Biegesteifigkeit ausschlaggebenden Schenkelflächen sind im Wesentlichen als geschlossene Flächen ausgebildet. Die Schenkel werden lediglich durch wenige, kleine Öffnungen; vorzugsweise kreisrunde Bohrungen, durchbrochen, wobei diese dazu dienen sollen, Reinigungsflüssigkeit ablaufen zu lassen.

Die technische Lehre der GB 1208829 führt dazu, dass ein derartiger Flaschenkorb eine große Masse und eine große benetzbare Oberfläche aufweist. Bekannt ist es

hierbei insbesondere auch (DE 32 01 881 A1), den jeweiligen Flaschenzellenträger aus einem korrosionsbeständigen Stahlblech durch Stanzen und Biegen in Form eines U-förmig abgewinkelten Profilträgers zu fertigen, und zwar mit zwei seitlichen Schenkeln und einem diese Schenkel verbindenden oberen Jochabschnitt, der in Richtung einer Längsachse des Flaschenträgers (Flaschenzellenträgerlängsachse) eine Vielzahl von Öffnungen vorgesehen sind, in die die Flaschenzellen so eingesetzt sind, daß sie mit ihren Flaschenzellenkörpern in den Raum zwischen den Schenkeln reichen und über die freien Enden der Schenkel aus dem Flaschenzellenträger nach unten vorstehen. Die Flaschenzellen sind dabei sowohl im Bereich der Öffnungen im Jochabschnitt, als auch an den freien Rändern der Schenkel durch Einrasten am Flaschenzellenträger gehalten.

Das Gesamtgewicht eines Flaschenkorbes ist in erheblichem Maße durch das Gewicht des Flaschenzellenträgers bestimmt. Weiterhin haben bekannte Flaschenkörbe den Nachteil, daß die Flaschenzellenträger aufgrund einer relativ großen Masse eine hohe Wärmekapazität aufweisen, so daß Wärme und damit Energie beispielsweise aus warmen Behandlungszonen der Flaschenreinigungsmaschine in kältere Behandlungszonen übertragen wird, was zu unerwünscht hohen Wärmeverlusten führt. Weiterhin besteht bei vielen bekannten Flaschenkörben auch der Nachteil einer relativ hohen Verschleppung von Reinigungsflüssigkeit aus einer Behandlungszone in eine anschließende Behandlungszone, und zwar aufgrund relativ großer Flächen des Flaschenzellenträgers, an denen flüssiges Behandlungsmedium anhaften kann, und/oder aufgrund von Hohlräumen, insbesondere auch innerhalb des Flaschenzellenträgers zwischen diesem und den Flaschenzellen.

Aufgabe der Erfindung ist es, einen Flaschenzellenträger aufzuzeigen, der die vorgenannten Nachteile vermeidet und außerdem bei möglichst geringer Masse und damit bei möglichst geringem Gesamtgewicht eine ausreichend hohe Stabilität besitzt.

Zur Lösung dieser Aufgabe ist ein Flaschenzellenträger entsprechend dem Patentanspruch 1 ausgebildet. Ein Flaschenkorb ist entsprechend dem Patentanspruch 28 ausgebildet.

Der erfindungsgemäße Flaschenzellenträger hat den Vorteil, daß er trotz hoher Stabilität ein geringes Gewicht aufweist und durch die erfindungsgemäße Ausbildung auch ein Verschleppen von flüssigem Reinigungsmedium und Wärme von einer Behandlungszone in eine nachfolgende Behandlungszone stark reduziert ist, und zwar durch eine wesentliche Verkleinerung der Gesamtoberfläche und der Masse im Bereich der Schenkel.

Weiterbildungen der Erfindung sind Gegenstand der Unteransprüche. Die Erfindung wurde im Folgenden anhand der Figuren an einem Ausführungsbeispiel näher erläutert. Es zeigen:
- Fig. 1: in perspektivischer Darstellung eine Teillänge eines Flaschenzellenträgers für einen Flaschenkorb einer ansonsten nicht dargestellten Flaschenreinigungsmaschine;
- Fig. 2: in vergrößerter perspektivischer Teildarstellung eine Seitenansicht des Flaschenzellenträgers der Figur 1 im Bereich einer längsseitigen Öffnung oder Ausstanzung einer ersten Geometrie;
- Fig. 3: eine Darstellung wie Figur 1, jedoch im Bereich einer der Öffnungen oder Ausstanzungen einer zweiten Geometrie;
- Fig. 4: in vereinfachter Darstellung einen Querschnitt durch einen Flaschenkorb bestehend aus dem Flaschenzellenträger der Figuren 1 - 3 und einer Vielzahl von in diesem Flaschenzellenträger gehaltenen Flaschenzellen.

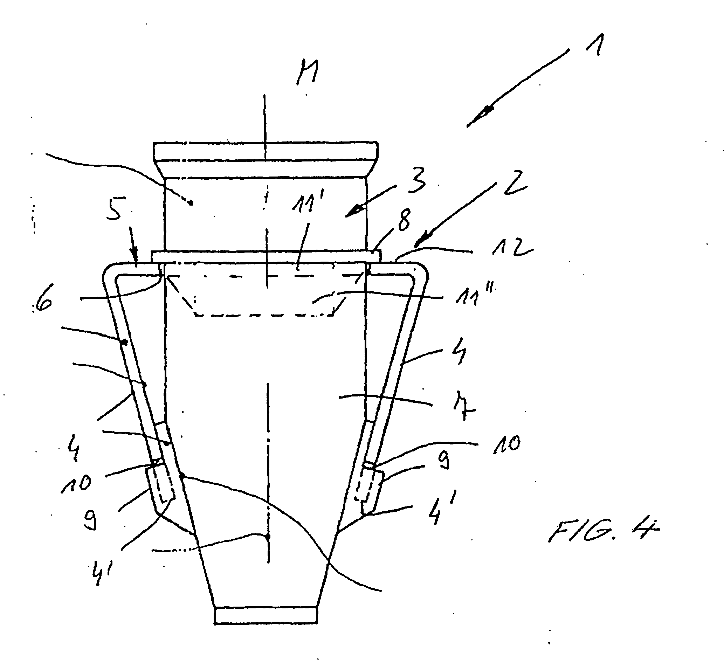

Der in der Figur 4 allgemein mit 1 bezeichnete Flaschenkorb besteht im wesentlichen aus dem Flaschenzellenträger 2, der aus einem korrosionsbeständigen Metallblech, vorzugsweise aus einem Edelstahlblech durch Stanzen und Biegen hergestellt ist, sowie aus einer Vielzahl von aus Kunststoff gefertigten und im Flaschenzellenträger 2 gehaltenen Flaschenzellen 3.

Der Flaschenzellenträger 2 ist als U-förmig abgewinkelter Profilträger hergestellt, und zwar mit zwei Schenkeln 4 und einem oberen, diese Schenkel miteinander verbindenden oberen Jochabschnitt 5. Die Schenkel 4, die sich ebenso wie der Jochabschnitt 5 über die gesamte Länge des Flaschenzellenträgers 2 erstrecken, liegen in Ebenen, die gegenüber der senkrecht zum Jochabschnitt 5 angeordneten und die Flaschenzellenträgerlängsachse einschließenden Mittelebene M derart geneigt, daß diese Schenkel 4 bzw. deren Ebenen einen spitzen Winkel miteinander einschließen, der sich zum Jochabschnitt 5 hin öffnet. Der Flaschenzellenträger 2 ist bei der dargestellten Ausführungsform symmetrisch zu dieser Mittelebene M ausgebildet.

Im Jochabschnitt 5 sind in regelmäßigen Abständen Öffnungen 6 vorgesehen, und zwar zur Aufnahme jeweils einer Flaschenzelle 2, die mit ihrem korbartigen Flaschenzellenkörper 7 durch die betreffende Öffnung 6 hindurchgeführt in den Raum zwischen den Schenkeln 4 hineinreicht und über die dem Jochabschnitt 5 entfernt liegenden freien Ränder 4' der Schenkel 4 nach unten aus dem Flaschenzellenträger 2 vorstehen. Mit einem oberen Bund oder Flansch 8 stützen sich die Flaschenzellen 3 an der den Schenkeln 4 abgewandten Oberseite des Jochabschnittes 5 am Rand der jeweiligen Öffnung 6 ab und sind durch Einrasten an den Öffnungen 6 gehalten. Eine Abstützung quer zur Flaschenzellenträgerlängsachse L sowie zugleich auch in Richtung dieser Längsachse wird für jede, mit ihrer Achse senkrecht zur Ebene des Jochabschnittes 5 orientierten Flaschenzelle 3 im unteren Bereich dadurch erreicht, daß die Schenkel 4 an ihrem Rand 4' gegen die Außenfläche der jeweiligen Flaschenzelle 3 anliegen und an der Außenfläche der Flaschenzellen 3 angeformte und über diese Außenfläche radial überstehende Rasten 9 in jeweils eine Ausklinkung 10 eingreifen, die am unteren freien Rand 4' der Schenkel 4 vorgesehen und an diesem Rand 4' offen ist.

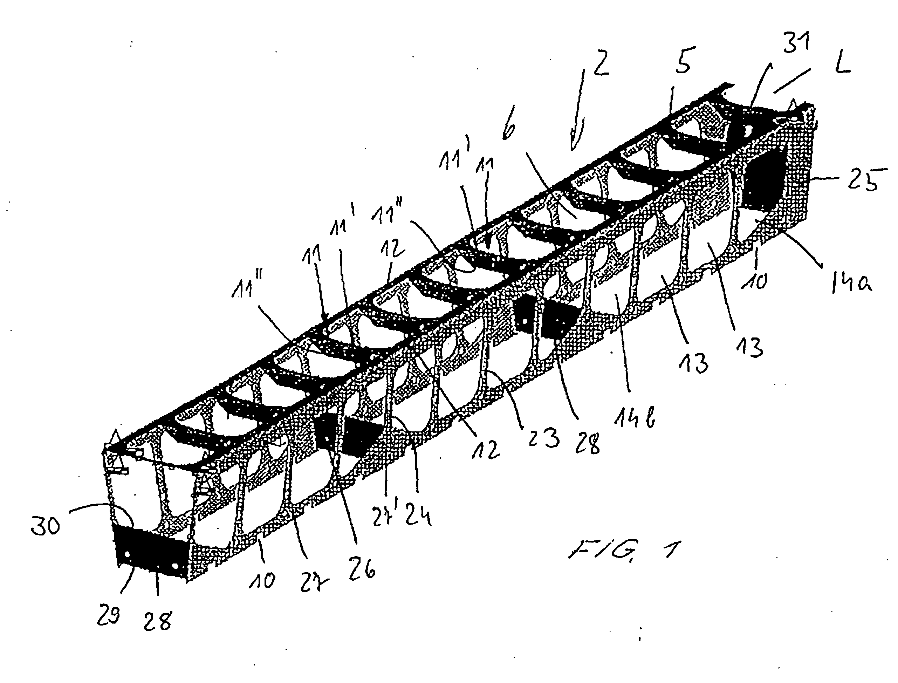

Wie insbesondere die Figur 1 zeigt, ist der Flaschenzellenträger 2 an seinem Jochabschnitt 5 durch die Ausnehmungen 6 derart gitter- oder leiterartig ausgebildet ist, daß sich für den Jochabschnitt 5 eine Struktur mit einer Vielzahl von Querstegen 11, die jeweils zwischen zwei Öffnungen 6 sowie auch an den beiden Enden des Flaschenzellenträgers 2 vorgesehen sind, sowie mit seitlichen Längsstegen 12 ergibt, die sich über die gesamte Länge des Flaschenzellenträgers 2 erstrecken und jeweils den Übergang zwischen dem Jochabschnitt 5 und einem Schenkel 4 bilden.

Die Querstege 11 sind beim Stanzen der Öffnungen 6 winkelstückartig derart hergestellt, daß sie einen oberen, in der Ebene des Jochabschnittes 5 liegenden und sich zwischen den Längsstegen 12 erstreckenden Schenkel 11' sowie einen gegenüber diesem Schenkel abgewinkelten Schenkel 11" bilden, der sich in Längsrichtung des betreffenden Quersteges 11 erstreckt, aber in einer Ebene senkrecht oder etwa senkrecht zur Ebene des Jochabschnittes 5 bzw. zur Flaschenzellenträgerlängsachse L liegt. Durch die Schenkel 11" wird u.a. eine verbesserte Anlage für die Flaschenzellen 3 im Bereich der Öffnungen 6 sowie zugleich auch eine Verstärkung der Querstege 11 und damit des Flaschenzellenträgers 2 an seiner Oberseite, d.h. im Bereich des Jochabschnittes 5 erreicht.

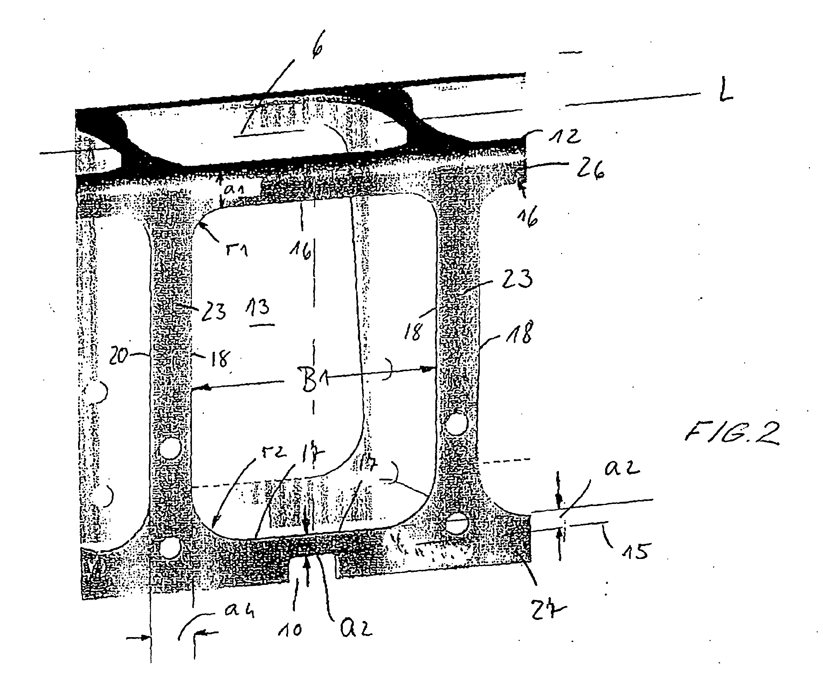

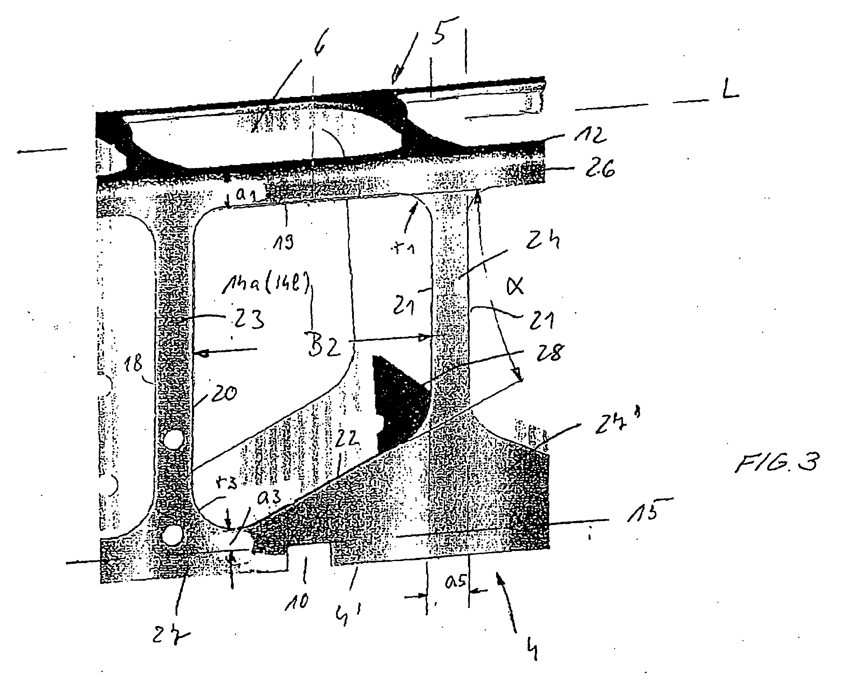

An den beiden Schenkeln 4 ist der Flaschenzellenträger 2 mit einer Vielzahl von Ausstanzungen bzw. Öffnungen versehen, die zwei unterschiedliche Geometrien aufweisen, und zwar mit den Öffnungen 13 einer ersten Geometrie, von denen in der Figur 2 eine derartige Öffnung vergrößert wiedergegeben ist, sowie mit den Öffnungen 14a und 14b einer zweiten Geometrie, von denen in der Figur 3 eine Öffnung 14a vergrößert wiedergegeben ist. Die Geometrie der Öffnung 14b unterscheidet sich von der Geometrie der Öffnung 14a lediglich dadurch, daß die Öffnung 14b spiegelbildlich zur Öffnung 14a ausgebildet ist, und zwar gespiegelt an einer gedachten Spiegelachse, die in der Ebene des betreffenden Schenkels 4 liegt und senkrecht zur Flaschenzellenträgerlängsachse L orientiert ist.

Wie die Figur 2 zeigt, sind die Öffnungen 13 im wesentlichen rechteckförmig ausgebildet sind, und zwar mit einer Breite B1 und einer gegenüber der Breite B1 etwas größeren Höhe. Die Breite B1 ist dabei in einer Achsrichtung parallel zur Flaschenzellenträgerlängsachse L angegeben. Die Höhe verläuft hierzu senkrecht. An den Ecken ist jede Öffnung 13 abgerundet, und zwar in der Nähe der zwischen dem jeweiligen Schenkel 4 und dem Jochabschnitt 5 gebildeten, sich in Längsrichtung des Flaschenzellenträgers 2 erstreckenden abgerundeten Kante mit dem Radius r1 und im Bereich der freien Ränder 4' mit dem Radius r2. Die Öffnungen 13 sind weiterhin so ausgeführt, daß zwischen dem oberen, sich parallel zur Flaschenzellenträgerlängsachse L erstreckenden Rand 16 jeder Ausnehmung 13 und der Ebene der Oberseite des Jochabschnitts 5 ein Abstand a1 und zwischen dem unteren, ebenfalls parallel zur Flaschenzellenträgerlängsachse L verlaufenden Rand 17 und einer Linie 15, auf der die geschlossenen Seiten der rechteckförmigen Ausklinkungen 10 liegen, ein Abstand a2 verbleiben. Mit 18 sind die senkrecht zur Flaschenzellenträgerlängsachse L verlaufenden seitlichen Ränder der Öffnung 13 bezeichnet

Die Öffnung 14a bzw. 14b besitzt eine in etwa trapezartige Geometrie mit einem oberen, parallel zur Flaschenzellenträgerlängsachse L verlaufenden Rand 19, mit zwei senkrecht zur Längserstreckung verlaufenden seitlichen Rändern 20 und 21 und mit einem unteren Rand 22, dessen gedachten Verlängerung mit der gedachten Verlängerung des oberen Randes 19 einen Winkel α in der Größenordnung zwischen 20° und 25°, beispielsweise von etwa 24° einschließt, und zwar derart, daß der Rand 21 kürzer ist als der Rand 20 (Figur 3). Der Abstand zwischen den Rändern 20 und 21 ist wiederum die parallel zur Längsachse L gemessene Breite B2. Der obere Rand 19 besitzt ebenfalls den Abstand a1 von der Ebene der Oberseite des Jochabschnitts 5 und der tiefste Punkt des unteren Randes 22 den Abstand a3 von der gedachten Linie 15. Die Ecken der Öffnungen 14a bzw. 14b sind wiederum abgerundet, und zwar am Übergang zwischen dem Rand 19 und den Rändern 20 und 21 mit dem Radius r1 und unten am Übergang zwischen den Rändern 20 und 22 mit dem Radius r3.

Wie die Figur 1 zeigt, sind die Öffnungen 13, 14a und 14b in dem jeweiligen Schenkel 4 in einer sich wiederholenden Folge in Längsrichtung vorgesehen, und zwar derart, daß die Öffnungen 13, 14a und 14b in Längsrichtung L aufeinander folgende Gruppen bilden, von denen jede Gruppe beispielsweise in der in der Figur 1 mit dem Pfeil A angegebenen Betrachtungsrichtung mit einer Öffnung 14a der zweiten Geometrie beginnt, auf die dann zwei Öffnungen 13 der ersten Geometrie folgen, und mit der Öffnung 14b der gespiegelten zweiten Geometrie abschließt, worauf eine neue Gruppe oder Teilfolge von Öffnungen 13, 14a und 14b folgt, und zwar wiederum beginnend mit der Öffnung 14a.

Die Öffnungen 14a und 14b sind in jeder Teilfolge so vorgesehen, daß jeweils der längere seitliche Rand 20 dieser Öffnungen einer Öffnung 13 der ersten Geometrie der Teilfolge benachbart liegt. Am Übergang zwischen zwei Teilfolgen schließt sich bei der angenommenen Betrachtungsrichtung A an eine Öffnung 14b eine Öffnung 14a an, und zwar derart, daß die kürzeren Ränder 21 dieser Öffnungen einander benachbart sind.

Durch die Öffnungen 13, 14a und 14b besitzt auch jeder Schenkel 4 eine gitter- oder leiterartige Struktur mit Querstegen 23, 24 und 25, mit einem oberen Längssteg 26, der sich in Längsrichtung L erstreckt und mit dem benachbarten Längssteg 12 einen Profilabschnitt in Form eines Winkelprofils bildet, sowie mit dem unteren, sich in Längsrichtung L erstreckenden Längssteg 27, der den freien Rand 4' mit den Ausklinkungen 10 aufweist. Die Querstege 23 besitzen über ihre gesamte Länge eine gleichbleibende Breite und sind lediglich am oberen und unteren Ende bedingt durch die abgerundeten Öffnungen 13, 14a und 14b etwas verbreitert ausgebildet. Die Querstege 24 besitzen ausgehend von dem oberen Längssteg 26 zunächst eine gleichbleibende Breite, die gleich der Breite der Querstege 23 ist, gehen dann aber in einen dreieckförmigen Abschnitt 27' des Längssteges 27 über, der (Abschnitt 27') von den aneinander anschließenden Öffnungen 14a und 14b gebildet ist. Die Querstege 23 sind zwischen zwei Öffnungen 13 durch deren Ränder 18 und zwischen einer Öffnung 13 und einer Öffnung 14a bzw. 14b durch einen Rand 18 und einen Rand 20 definiert. Der Quersteg 25, der an jedem Schenkel 4 jeweils einmal an beiden Enden des Flaschenzellenträgers 2 vorgesehen ist, besitzt eine im Vergleich zu den übrigen Querstegen größere Breite.

Zwischen den Schenkeln 4 sind ebenfalls aus Metallblech, vorzugsweise aus einem Edelstahlblech gefertigte Verbindungsstege 28 vorgesehen, und zwar jeweils dort, wo die Querstege 24 gebildet sind. Die Verbindungsstege 28 liegen mit ihren Oberflächenseiten senkrecht zur Flaschenzellenträgerlängsachse L und in einer gemeinsamen Ebene mit den beiden zugehörigen Querstegen 24 an den beiden Schenkeln 4. Die Verbindungsstege 28 erstrecken sich zwischen den beiden Schenkeln 4. Die Höhe der Verbindungsstege 28 ist so gewählt, daß diese Stege, die mit ihrem unteren Rand 29 und ihrem oberen Rand 30 parallel zur Ebene des Jochabschnittes 5 liegen, mit ihrem unteren Rand 29 niveaugleich oder etwas niveaugleich mit der Linie 15 angeordnet sind und mit ihrem oberen Rand 30 etwa bis auf ein Niveau reichen, an dem die Querstege 27 jeweils in den dreieckförmigen Abschnitt 27' übergehen. An den beiden Enden ist der Flaschenzellenträger 2 jeweils mit einem die Schenkel 4 und den Jochabschnitt 5 verbindenden Wandabschnitt oder Abschlußblech 31 versehen, an welchem der Flaschenträger an einem nicht dargestellten Transportelement, beispielsweise an einer Kette der Waschmaschine befestigt ist. Ebenso wie die Verbindungsstege 28 sind auch die Wandabschnitte 31 aus dem korrosionsbeständigen Blech hergestellt. Bei den vorstehend beschriebenen Ausführungen befinden sich die Ausklinkungen 10 jeweils zwischen zwei Querstegen 23 bzw. 24.

Wie die Figuren auch zeigen, sind die Öffnungen 13, 14a und 14b großformatig ausgeführt, d.h. die Breite B1 bzw. B2 und die Höhe der Öffnungen 13, 14a, 14b sind wesentlich größer als die Breite der zwischen den Öffnungen verbliebenen Querstege 23, 24, 25, aber auch wesentlich größer als die Breite der sich in Flaschenzellenträgerlängsachse L erstreckenden Stege 26, 27.

Der beschriebene Flaschenzellenträger hat den Vorteil einer hohen Stabilität bei reduzierter Masse und damit auch den Vorteil eines geringen Gewichtes sowie einer geringen Wärmekapazität, so daß bei Verwendung in der Reinigungsmaschine u.a. weniger Wärme und damit Energie aus warmen Zonen dieser Maschine in kalte Bereiche übertragen wird. Durch die filigrane Ausbildung des Flaschenzellenträgers insbesondere an den Schenkeln 4 sowie durch die hochkant angeordneten Verbindungsstege 28 und die ebenfalls hochkant angeordneten Abschlußbleche 31 ist weiterhin in vorteilhafter Weise das Verschleppen von Reinigungsflüssigkeit (Wasser, Lauge usw.) mit den in der Reinigungsmaschine umlaufenden Flaschenträgern von einer Behandlungszone in nachfolgende Behandlungszonen zumindest stark reduziert.

Bei bevorzugten Ausführungsbeispielen, die sich durch eine hohe Stabilität bei extrem geringen Gewicht auszeichnen, sind die die Geometrie der Öffnungen 13, 14 und 14b definierenden Parameter entsprechend der beiliegenden Tabelle gewählt:

| Parameter | Beispiel 1 | Beispiel 2 | Beispiel 3 | Beispiel 4 |
|---|---|---|---|---|
| Abstand a1 | 12 mm | 22 mm | 20 mm | 35 mm |
| Abstand a2 | 7,5 mm | 10mm | 12 mm | 21 mm |
| Breite B1 | 90mm | 90 mm | 90 mm | 87 mm |
| Radius r2 | 20mm | 20 mm | 25 mm | 27,5 mm |
| Abstand a3 | 7,5 mm | 10 mm | 15 mm | 40 mm |
| Breite B2 | 90 mm | 90 mm | 90 mm | 77 mm |
| Radius r3 | 17 mm | 17 mm | 17 mm | 24 mm |
| Dicke d1 | 2,4 mm | 2,6 mm | 2,9 mm | 4,5 mm |
| Dicke d2 | 3 mm | 3 mm | 3 mm | 5 mm |

In der vorstehenden Tabelle sind d1 die Dicke des Blechs, welches für das von den Schenkeln 4 und dem Jochabschnitt 5 gebildete U-Tragprofil verwendet ist, und d2 die Blechdicke der Verbindungsstege 28 sowie Abschlußbleche 31.

Die in der vorstehenden Tabelle angegebenen Beispiele stellen eine Optimierung des jeweiligen Flaschenzellenträgers 2 hinsichtlich Gewicht und Belastbarkeit dar. So ergibt sich bei dem Beispiel 1 eine Reduzierung des Gesamtgewichts des Flaschenzellenträgers 2 um ca. 48% bezogen auf das Gesamtgewicht eines Flaschenzellenträgers mit gleichen Abmessungen und aus gleichem Material mit gleicher Materialdicke, aber mit nicht strukturierten Schenkeln 4, d.h. mit Schenkeln 4 die die Öffnungen 13, 14a und 14b nicht aufweisen.

Beim Beispiel 2 ergibt sich eine Reduzierung des Gesamtgewichts um ca. 41% und zwar wiederum bezogen auf das Gesamtgewicht eines Flaschenzellenträgers mit gleichen Abmessungen und aus gleichem Material mit gleicher Materialdicke, aber mit nicht strukturierten Schenkeln 4. Belastungsversuche, bei denen unter Last die Durchbiegung des Flaschenzellenträgers 2, d.h. die Verformung in einer Achsrichtung senkrecht zur Ebene des Jochabschnittes 5 gemessen wurde, ergaben praktisch keinen Unterschied zu einem Flaschenzellenträger gleicher Größe ohne strukturierte Schenkel 4.

Das Beispiel 3 ergab eine Reduzierung des Gesamtgewichtes von etwa 36%, und zwar wiederum bezogen auf das Gesamtgewicht eines Flaschenzellenträgers mit gleichen Abmessungen und aus gleichem Material mit gleicher Materialdicke, aber mit nicht strukturierten Schenkeln 4. Auch hier ergaben sich bei Belastungsversuchen praktisch keine Unterschiede zu einem Flaschenzellenträger mit nicht strukturierten Schenkeln. Gleiches Ergebnis hatten Versuche an dem Flaschenzellenträger gemäß Beispiel 4, und zwar mit einer Reduzierung des Gesamtgewichts um ca. 25% wiederum bezogen auf das Gesamtgewicht eines Flaschenzellenträgers mit gleichen Abmessungen und aus gleichem Material mit gleicher Materialdicke, aber mit nicht strukturierten Schenkeln 4.

Die Erfindung wurde voranstehend an Ausführungsbeispielen beschrieben. Es versteht sich, daß Änderungen sowie Abwandlungen möglich sind, ohne daß dadurch der der Erfindung zugrundeliegende Erfindungsgedanke verlassen wird.

### Bezugszeichenliste

- 1: Flaschenkorb
- 2: Flaschenzellenträger
- 3: Flaschenzelle
- 4: Schenkel
- 5: Jochabschnitt
- 6: Öffnungen
- 7: Flaschenzellenkörper
- 8: Flansch
- 9: Rast
- 10: Ausklinkung
- 11: Quersteg
- 11', 11": Schenkel
- 12: Längssteg
- 13, 14a, 14b: Ausstanzung oder Öffnung
- 15: Linie
- 16, 17, 18: Öffnungsrand
- 19, 20, 21, 22: Öffnungsrand
- 23, 24, 25: Quersteg
- 26, 27: Längssteg
- 27': dreieckförmiger Abschnitt
- 28: Verbindungssteg
- 29: Oberseite Verbindungssteg
- 30: Unterseite Verbindungssteg
- 31: Abschlußblech

- A: Betrachtungsrichtung
- L: Flaschenzellenträgerlangsachse

## Patentansprüche

1. Flaschenzellenträger eines Flaschenkorbes (1) für Reinigungsmaschinen, hergestellt als U-förmig abgewinkelter Profilträger aus einem Flachmaterial mit zwei Schenkeln (4) und mit einem diese Schenkel (4) miteinander verbindenden Jochabschnitt (5), in welchem in einer Flaschenzellenträgerlängsachse (L) des Flaschenzellenträgers (2) aufeinander folgend Öffnungen (6) zur Aufnahme von Flaschenzellen (3) vorgesehen sind, die sich mit jeweils einem Flaschenzellenkörper (7) in den zwischen den Schenkeln (4) gebildeten Raum hineinerstrecken, wobei die Schenkel (4) zur Bildung einer gitter- oder leiterartigen Struktur mit einer Vielzahl von großformatigen Öffnungen (13, 14a, 14b) versehen sind, die in der Längsachse (L) aufeinander folgend vorgesehen sind, **dadurch gekennzeichnet, daß** die Gesamtfläche der Öffnungen (13, 14a, 14b) größer ist als die restliche Fläche der Schenkel (4).

2. Flaschenzellenträger nach Anspruch 1, **dadurch gekennzeichnet, daß** die Breite (B1, B2), die die Öffnungen (13, 14a, 14b) in Richtung der Flaschenzellenträgerlängsachse (L) aufweisen, und/oder die Höhe, die die Öffnungen (13, 14a, 14b) in einer Achsrichtung senkrecht zur Flaschenzellenträgerlängsachse (L) besitzen, wesentlich größer ist als die Breite der zwischen den Öffnungen verbliebene, quer bzw. senkrecht zur Flaschenzellenträgerlängsachse (L) verlaufende Querstege (23, 24, 25) und/oder als die Breite der sich in Flaschenzellenträgerlängsachse (L) erstreckenden Stege oder Bereiche (26, 27) am Übergang zum Jochabschnitt (5) bzw. am freien, dem Jochabschnitt (5) entfernt liegenden Rand (4') des jeweiligen Schenkels (4).

3. Flaschenzellenträger nach Anspruch 1 oder 2, **dadurch gekennzeichnet, daß** er symmetrisch zu einer die Flaschenzellenträgerlängsachse (L) einschließenden Mittelebene (M) ausgebildet ist.

4. Flaschenzellenträger nach einem der vorhergehenden Ansprüche, **dadurch gekennzeichnet, daß** er symmetrisch zu einer durch die Mitte des Flaschenzellenträgers verlaufende und senkrecht zur Flaschenzellenträgerlängsachse (L) angeordneten Querebene ausgebildet ist.

5. Flaschenzellenträger nach einem der vorhergehenden Ansprüche, **dadurch gekennzeichnet, daß** die Öffnungen (13, 14a, 14b) abgerundete Ecken aufweisen.

6. Flaschenzellenträger nach einem der vorhergehenden Ansprüche, **dadurch gekennzeichnet, daß** in den Schenkeln (4) mehrere Öffnungen (13) einer ersten Geometrie und mehrere Öffnungen (14, 14b) einer zweiten Geometrie vorgesehen sind.

7. Flaschenzellenträger nach Anspruch 6, **dadurch gekennzeichnet, daß** die Öffnungen (13) der ersten Geometrie quadratisch oder rechteckförmig ausgebildet sind.

8. Flaschenzellenträger nach Anspruch 7, **dadurch gekennzeichnet, daß** bei rechteckförmiger Ausbildung der Öffnungen (13) der ersten Geometrie die längeren Öffnungsränder (18) in der Achsrichtung senkrecht zur Flaschenzellenträgerlängsachse (L) orientiert sind.

9. Flaschenzellenträger nach einem der vorhergehenden Ansprüche 6-8, **dadurch gekennzeichnet, daß** die Öffnungen (14a, 14b) der zweiten Geometrie trapezartig ausgebildet sind, und zwar mit drei rechtwinklig aneinander anschließenden Öffnungsrändern (19, 20, 21), von denen ein erster und ein zweiter, die Basis bzw. die der Basis gegenüberliegende Seite bildender Öffnungsrand (20, 21) sich jeweils senkrecht zur Flaschenzellenträgerlängsachse (L) erstreckt, ein rechtwinklig zu diesen Öffnungsrändern (20, 21) verlaufender und eine Trapezseite bildender dritter Öffnungsrand (19) parallel zur Flaschenzellenträgerlängsachse (L) liegt und ein vierter, eine Trapezseite bildender Öffnungsrand (22) mit dem dritten Öffnungsrand (19) einen spitzen Winkel (α) einschließt, beispielsweise einen Winkel in der Größenordnung zwischen 20° und 25°, z.B. von etwa 24°.

10. Flaschenzellenträger nach einem der vorhergehenden Ansprüche 6-9, **dadurch gekennzeichnet, daß** die Öffnungen (13, 14a, 14b) an dem jeweiligen Schenkel (4) wenigstens eine Folge von Öffnungen bilden, in der in Richtung der Flaschenzellenträgerlängsachse (L) in einer angenommenen Betrachtungsrichtung (A) auf eine Öffnung (14a) der zweiten Geometrie wenigstens eine Öffnung (13) der ersten Geometrie und auf diese wiederum eine Öffnung (14b) der zweiten Geometrie folgen, wobei die Öffnungen der zweiten Geometrie an den beiden Enden dieser Folge jeweils spiegelbildlich zu einer gedachten, die Flaschenzellenträgerlängsachse (L) senkrecht schneidenden und in der Mitte der Folge angeordneten Spiegelebene ausgebildet sind.

11. Flaschenzellenträger nach Anspruch 9 und 10, **dadurch gekennzeichnet, daß** die Öffnungen (14a, 14b) der zweiten Geometrie mit ihrem zweiten Umfangsrand (21) jeweils am Anfang bzw. Ende der Folge vorgesehen sind.

12. Flaschenzellenträger nach Anspruch 10 oder 11, **dadurch gekennzeichnet, daß** zwischen den beiden Öffnungen (14a, 14b) der zweiten Geometrie wenigstens zwei Öffnungen (13) der ersten Geometrie vorgesehen sind.

13. Flaschenzellenträger nach der Ansprüche 10 - 12, **dadurch gekennzeichnet daß** in Richtung der Flaschenzellenträgerlängsachse (L) die Öffnungsfolge mehrfach vorgesehen ist, wobei am Übergang zwischen zwei Folgen jeweils eine Öffnung (14b) der zweiten Geometrie der einen Folge und eine spiegelbildlich hierzu ausgeführte Öffnung (14b) der zweiten Geometrie der anschließenden Folge vorgesehen sind.

14. Flaschenzellenträger nach Anspruch 13, **dadurch gekennzeichnet, daß** am Übergang zwischen zwei Öffnungsfolgen der den freien Rand des jeweiligen Schenkels (4) bildende, sich in Flaschenzellenträgerlängsrichtung (L) erstreckende Randbereich oder Längssteg (27) eine dreieckförmige Verbreiterung (27') aufweist.

15. Flaschenzellenträger nach einem der vorhergehenden Ansprüche, **dadurch gekennzeichnet, daß** in vorgegebenen Abständen zwischen den Schenkeln (4) aus Flachmaterial hergestellte Verbindungsstege (28) vorgesehen sind, die mit ihren Oberflächenseiten in Ebenen senkrecht zur Flaschenzellenträgerlängsachse (L) orientiert sind.

16. Flaschenzellenträger nach Anspruch 15, **dadurch gekennzeichnet, daß** die Verbindungsstege (28) im Bereich des Übergangs zwischen zwei Öffnungsfolgen vorgesehen sind.

17. Flaschenzellenträger nach Anspruch 15 oder 16, **dadurch gekennzeichnet, daß** die Verbindungsstege (28) eine Höhe aufweisen, die gleich oder in etwa gleich der Höhe der dreieckförmigen Verbreiterung (27') ist.

18. Flaschenzellenträger nach einem der vorhergehenden Ansprüche, **gekennzeichnet durch** aus Flachmaterial hergestellte, mit ihren Oberflächenseiten senkrecht zur Flaschenzellenträgerlängsachse (L) orientierte, die Schenkel (4) sowie den Jochabschnitt (5) miteinander verbindende Abschlusselemente (31) an den beiden Enden des Flaschenzellenträgers (2).

19. Flaschenzellenträger nach einem der vorhergehenden Ansprüche, **dadurch gekennzeichnet, daß** die Schenkel (4) im Bereich des freien Randes (4') jeweils mit Ausklinkungen, vorzugsweise mit zum freien Rand (4') hin offenen Ausklinkungen (10) versehen sind, und daß die dem Jochabschnitt (5) zugewandten geschlossenen Seiten der Ausklinkungen (10) an dem jeweiligen Schenkel (4) auf einer gemeinsamen Linie (15) parallel zur Flaschenzellenträgerlängsachse (L) liegen.

20. Flaschenzellenträger nach Anspruch 19, **dadurch gekennzeichnet, daß** die Ausklinkungen (10) jeweils zwischen zwei von den Öffnungen (13, 14a, 14b) in den Schenkeln (4) gebildeten Querstegen (23, 24, 25) angeordnet sind.

21. Flaschenzellenträger nach einem der vorhergehenden Ansprüche, **dadurch gekennzeichnet, daß** die von den Öffnungen (13, 14a, 14b) in den Schenkeln (4) gebildeten Querstege (23, 24, 25) dort vorgesehen sind, wo auch zwischen den Öffnungen (6) im Jochabschnitt (5) Querstege (11) gebildet sind.

22. Flaschenzellenträger nach einem der vorhergehenden Ansprüche 6-14, **dadurch gekennzeichnet, daß** bei einer Folge von Öffnungen (13, 14a, 14b) in dem jeweiligen Schenkel (4), die (Folge) am Anfang und am Ende jeweils eine Öffnung (14a, 14b) der zweiten Geometrie und zwischen diesen zwei Öffnungen (13) der ersten Geometrie aufweist und die Öffnungen der zweiten Geometrie spiegelbildlich zueinander angeordnet sind, die Geometrie der Öffnungen durch die nachstehenden Parameter bestimmt ist,
| | |
|---|---|
| Abstand a1 | 12 mm |
| Abstand a2 | 7,5 mm |
| Breite B1 | 90 mm |
| Radius r2 | 20 mm |
| Abstand a3 | 7,5 mm |
| Breite B2 | 90 mm |
| Radius r3 | 17 mm |
| Dicke d1 | 2,4 mm |
| Dicke d2 | 3 mm |
wobei
a1 der Abstand des jeweiligen der Ebene des Jochabschnitts (5) am nächsten liegenden Öffnungsrandes (16, 19) der Öffnungen,
a2 der Abstand des dem freien Rand des Schenkels (4) am nächsten liegenden Öffnungsrandes (17) der Öffnungen der ersten Geometrie von dem freien Rand (4') oder der Randlinie (15) der Ausklinkungen (10),
a3 der Abstand des dem freien Rand (4') des Schenkels (4) am nächsten liegenden Randbereichs der Öffnung der zweiten Geometrie von diesem freien Rand (4') oder von der Randlinie (15) der Ausklinkungen,
B1 die Breite der Öffnungen (13) der ersten Geometrie,
B2 die Breite der Öffnungen (14a, 14b) der zweiten Geometrie,
r1 der Radius der Abrundung der Ecken der Öffnungen (13) der ersten Geometrie und
r3 der Radius der Abrundung am Übergang zwischen dem ersten und vierten Öffnungsrand (20, 22) der Öffnungen der zweiten Geometrie sind.

23. Flaschenzellenträger nach einem der vorhergehenden Ansprüch 6-14, **dadurch gekennzeichnet, daß** bei einer Folge von Öffnungen (13, 14a, 14b) in dem jeweiligen Schenkel (4), die (Folge) am Anfang und am Ende jeweils eine Öffnung (14a, 14b) der zweiten Geometrie und zwischen diesen zwei Öffnungen (13) der ersten Geometrie aufweist und die Öffnungen der zweiten Geometrie spiegelbildlich zueinander angeordnet sind, die Geometrie der Öffnungen durch die nachstehenden Parameter bestimmt ist,
| | |
|---|---|
| Abstand a1 | 22 mm |
| Abstand a2 | 10 mm |
| Breite B1 | 90 mm |
| Radius r2 | 20 mm |
| Abstand a3 | 10mm |
| Breite B2 | 90 mm |
| Radius r3 | 17 mm |
| Dicke d1 | 2,6 mm |
| Dicke d2 | 3 mm |
wobei
a1 der Abstand des jeweiligen der Ebene des Jochabschnitts (5) am nächsten liegenden Öffnungsrandes (16, 19) der Öffnungen,
a2 der Abstand des dem freien Rand des Schenkels (4) am nächsten liegenden Öffnungsrandes (17) der Öffnungen der ersten Geometrie von dem freien Rand (4') oder der Randlinie (15) der Ausklinkungen (10),
a3 der Abstand des dem freien Rand (4') des Schenkels (4) am nächsten liegenden Randbereichs der Öffnung der zweiten Geometrie von diesem freien Rand (4') oder von der Randlinie (15) der Ausklinkungen,
B1 die Breite der Öffnungen (13) der ersten Geometrie,
B2 die Breite der Öffnungen (14a, 14b) der zweiten Geometrie,
r1 der Radius der Abrundung der Ecken der Öffnungen (13) der ersten Geometrie und
r3 der Radius der Abrundung am Übergang zwischen dem ersten und vierten Öffnungsrand (20, 22) der Öffnungen der zweiten Geometrie sind.

24. Flaschenzellenträger nach einem der vorhergehenden Ansprüche 6-14, **dadurch gekennzeichnet, daß** bei einer Folge von Öffnungen (13, 14a, 14b) in dem jeweiligen Schenkel (4), die (Folge) am Anfang und am Ende jeweils eine Öffnung (14a, 14b) der zweiten Geometrie und zwischen diesen zwei Öffnungen (13) der ersten Geometrie aufweist und die Öffnungen der zweiten Geometrie spiegelbildlich zueinander angeordnet sind, die Geometrie der Öffnungen durch die nachstehenden Parameter bestimmt ist,
| | |
|---|---|
| Abstand a1 | 20 mm |
| Abstand a2 | 12 mm |
| Breite B1 | 90 mm |
| Radius r2 | 25 mm |
| Abstand a3 | 15 mm |
| Breite B2 | 90 mm |
| Radius r3 | 17 mm |
| Dicke d1 | 2,9 mm |
| Dicke d2 | 3 mm |
wobei
a1 der Abstand des jeweiligen der Ebene des Jochabschnitts (5) am nächsten liegenden Öffnungsrandes (16, 19) der Öffnungen,
a2 der Abstand des dem freien Rand des Schenkels (4) am nächsten liegenden Öffnungsrandes (17) der Öffnungen der ersten Geometrie von dem freien Rand (4') oder der Randlinie (15) der Ausklinkungen (10),
a3 der Abstand des dem freien Rand (4') des Schenkels (4) am nächsten liegenden Randbereichs der Öffnung der zweiten Geometrie von diesem freien Rand (4') oder von der Randlinie (15) der Ausklinkungen,
B1 die Breite der Öffnungen (13) der ersten Geometrie,
B2 die Breite der Öffnungen (14a, 14b) der zweiten Geometrie,
r1 der Radius der Abrundung der Ecken der Öffnungen (13) der ersten Geometrie und
r3 der Radius der Abrundung am Übergang zwischen dem ersten und vierten Öffnungsrand (20, 22) der Öffnungen der zweiten Geometrie sind.

25. Flaschenzellenträger nach einem der vorhergehenden Ansprüche 6-14, **dadurch gekennzeichnet, daß** bei einer Folge von Öffnungen (13, 14a, 14b) in dem jeweiligen Schenkel (4), die (Folge) am Anfang und am Ende jeweils eine Öffnung (14a, 14b) der zweiten Geometrie und zwischen diesen zwei Öffnungen (13) der ersten Geometrie aufweist und die Öffnungen der zweiten Geometrie spiegelbildlich zueinander angeordnet sind, die Geometrie der Öffnungen durch die nachstehenden Parameter bestimmt ist,
| | |
|---|---|
| Abstand a1 | 35 mm |
| Abstand a2 | 21 mm |
| Breite B1 | 87 mm |
| Radius r2 | 27,5 mm |
| Abstand a3 | 40mm |
| Breite B2 | 77 mm |
| Radius r3 | 24mm |
| Dicke d1 | 4,5 mm |
| Dicke d2 | 5 mm |
wobei
a1 der Abstand des jeweiligen der Ebene des Jochabschnitts (5) am nächsten liegenden Öffnungsrandes (16, 19) der Öffnungen,
a2 der Abstand des dem freien Rand des Schenkels (4) am nächsten liegenden Öffnungsrandes (17) der Öffnungen der ersten Geometrie von dem freien Rand (4') oder der Randlinie (15) der Ausklinkungen (10),
a3 der Abstand des dem freien Rand (4') des Schenkels (4) am nächsten liegenden Randbereichs der Öffnung der zweiten Geometrie von diesem freien Rand (4') oder von der Randlinie (15) der Ausklinkungen,
B1 die Breite der Öffnungen (13) der ersten Geometrie,
B2 die Breite der Öffnungen (14a, 14b) der zweiten Geometrie,
r1 der Radius der Abrundung der Ecken der Öffnungen (13) der ersten Geometrie und
r3 der Radius der Abrundung am Übergang zwischen dem ersten und vierten Öffnungsrand (20, 22) der Öffnungen der zweiten Geometrie sind.

26. Flaschenzellenträger nach einem der vorhergehenden Ansprüche, **dadurch gekennzeichnet, daß** die zwischen den Öffnungen (13, 14a, 14b) am Schenkel (4) gebildeten Querstege (23, 24) gleiche Breite aufweisen.

27. Flaschenzellenträger nach einem der vorhergehenden Ansprüche, **gekennzeichnet durch** seine Herstellung aus korrosionsbeständigem Metallblech, vorzugsweise Stahlblech.

28. Flaschenkorb für Reinigungsmaschinen mit einem Flaschenzellenträger (2) und mit mehreren an diesem Flaschenzellenträger vorgesehenen Flaschenzellen (3), **dadurch gekennzeichnet, daß** der Flaschenzellenträger (2) entsprechend einem der vorhergehenden Ansprüche ausgebildet ist.

## Claims

1. Bottle cell carrier of a bottle basket (1) for cleaning machines, the said bottle cell carrier being produced as a U-shaped, angled profile carrier from a flat material and having two portions (4) and a yoke section (5) that interconnects the said portions (4), in which yoke section openings (6) are provided consecutively in a longitudinal axis (L) of the bottle cell carrier (2) to accommodate bottle cells (3), which extend respectively with a bottle cell body (7) into the space formed between the portions (4), wherein, to form a grid-like or ladder-like structure, the portions (4) are provided with a plurality of large-sized openings (14, 14a, 14b), which are provided consecutively in the longitudinal axis (L), **characterised in that** the overall area of the openings (13, 14a, 14b) is larger than the remaining area of the portions (4).

2. Bottle cell carrier according to claim 1, **characterised in that** the width (B1, B2), which the openings (13, 14a, 14b) have in the direction of the longitudinal axis (L) of the bottle cell carrier, and/or the height, which the openings (13, 14a, 14b) have in an axial direction at right angles relative to the longitudinal axis (L) of the bottle cell carrier, is substantially greater than the width of the cross bars (23, 24, 25), which remain between the openings and extend transversely or respectively at right angles to the longitudinal axis (L) of the bottle cell carrier and/or than the width of the bars extending in the longitudinal axis (L) of the bottle cell carrier or regions (26,27) at the transition to the yoke section (5) or respectively at the free edge (4') of the respective portion (4) remote from the yoke section (5).

3. Bottle cell carrier according to claim 1 or 2, **characterised in that** the said bottle cell carrier is symmetrical with a central plane (M) that includes the longitudinal axis (L) of the bottle cell carrier.

4. Bottle cell carrier according to one of the preceding claims, **characterised in that** the said bottle cell carrier is symmetrical with a transverse plane, which extends through the centre of the bottle cell carrier and is disposed at right angles to the longitudinal axis (L) of the bottle cell carrier.

5. Bottle cell carrier according to one of the preceding claims, **characterised in that** the openings (13, 14a, 14b) include rounded corners.

6. Bottle cell carrier according to one of the preceding claims, **characterised in that** a plurality of openings (13) with a first geometry and a plurality of openings (14, 14b) with a second geometry are provided in the portions (4).

7. Bottle cell carrier according to claim 6, **characterised in that** the openings (13) of the first geometry are square or rectangular.

8. Bottle cell carrier according to claim 7, **characterised in that** where the embodiment of the openings (13) of the first geometry is rectangular, the longer opening edges (18) are orientated in the axial direction at right angles to the longitudinal axis (L) of the bottle cell carrier.

9. Bottle cell carrier according to one of preceding claims 6-8, **characterised in that** the openings (14a, 14b) of the second geometry are trapezoid-like, with three opening edges (19, 20 21) abutting against one another in a rectangular manner, of which a first and a second opening edge (20, 21), forming the base or respectively the side situated opposite to the base, extend respectively at right angles to the longitudinal axis (L) of the bottle cell carrier, a third opening edge (19) extends at right angles to the said opening edges (20, 21) and forms a side of a trapeze parallel to the longitudinal axis (L) of the bottle cell carrier and a fourth opening edge (22), that forms a side of the trapeze and extends at an acute angle (α), for example an angle in the order of between 20° and 25°, for example approximately 24°, relative to the third opening edge (19).

10. Bottle cell carrier according to one of preceding claims 6-9, **characterised in that** the openings (13, 14a, 14b) form at least one sequence of openings at the respective portion (4), in which sequence in the direction of the longitudinal axis (L) of the bottle cell carrier in an assumed viewing direction (A) an opening (14a) of the second geometry is followed by at least one opening (13) of the first geometry and this latter is followed in its turn by an opening (14b) of the second geometry, wherein the openings of the second geometry at the two ends of this sequence are each mirror-inverted relative to a conceived mirror plane that intersects the longitudinal axis (L) of the bottle cell carrier at right angles and is disposed in the centre of the sequence.

11. Bottle cell carrier according to claim 9 and 10, **characterised in that** the openings (14a, 14b) of the second geometry are provided with their second circumferential edge (21) respectively at the beginning or respectively at the end of the sequence.

12. Bottle cell carrier according to claim 10 or 11, **characterised in that** at least two openings (13) of the first geometry are provided between the two openings (14a, 14b) of the second geometry.

13. Bottle cell carrier according to claims 10-12, **characterised in that** in the direction of the longitudinal axis (L) of the bottle cell carrier the sequence of openings is provided repeatedly, wherein at the transition between two sequences respectively there is provided one opening (14b) of the second geometry of the one sequence and an opening (14b) of the second geometry of the following sequence that is configured mirror-inverted thereto.

14. Bottle cell carrier according to claim 13, **characterised in that** at the transition between two sequences of openings, the edge region or longitudinal bar (27), which forms the free edge of the respective portion (4) and extends in the direction of the longitudinal axis (L) of the bottle cell carrier, includes a triangular widening.

15. Bottle cell carrier according to one of the preceding claims, **characterised in that** connecting bars (28) produced from flat material are provided at predetermined spacings between the portions (4), the said connecting bars being orientated with their upper sides in planes at right angles to the longitudinal axis (L) of the bottle cell carrier.

16. Bottle cell carrier according to claim 15, **characterised in that** the connecting bars (28) are provided in the region of the transition between two sequences of openings.

17. Bottle cell carrier according to claim1 5 or 16, **characterised in that** the height of the connecting bars (28) is the same or approximately the same as the height of the triangular widening (27').

18. Bottle cell carrier according to one of the preceding claims, **characterised by** closure members (31), at the two ends of the bottle cell carrier (2), the said closure members being produced from flat material, being orientated with their upper sides at right angles to the longitudinal axis (L) of the bottle cell carrier and connecting the portions (4) and the yoke section (5) together.

19. Bottle cell carrier according to one of the preceding claims, **characterised in that** the portions (4) are provided respectively in the region of the free edge (4') with notches, preferably with notches (10') that are open towards the free edge (4'), and **in that** the closed sides of the notches (10) facing the yoke section (5) on the respective portion (4) lie on a common line (15) parallel to the longitudinal axis (L) of the bottle cell carrier.

20. Bottle cell carrier according to claim 19, **characterised in that** the notches (10) are disposed respectively between cross bars (23, 24, 25) that are formed between two of the openings (13, 14a, 14b) in the portions (4).

21. Bottle cell carrier according to one of the preceding claims, **characterised in that** the cross bars (23, 24, 25) formed between the openings (13, 14a, 14b) in the portions (4) are provided at the same location as cross bars (11) that are formed between the openings (6) in the yoke section (5).

22. Bottle cell carrier according to one of the preceding claims 6-14, **characterised in that** with a sequence of openings (13, 14a, 14b) in the respective portion (4), at the beginning and at the end respectively of the said sequence there is an opening (14a, 14b) of the second geometry and between these said openings there are two openings (13) of the first geometry and the openings of the second geometry are disposed in a mirror-inverted manner one relative to the other, the geometry of the openings being determined by the following parameters
| | |
|---|---|
| Spacing a1 | 12 mm |
| Spacing a2 | 7.5 mm |
| Width B1 | 90 mm |
| Radius r2 | 20 mm |
| Spacing a3 | 7.5 mm |
| Width B2 | 90 mm |
| Radius r3 | 17 mm |
| Thickness d1 | 2.4 mm |
| Thickness d2 | 3 mm |
wherein
a1 is the spacing of the respective opening edge (16, 19) of the openings adjacent the plane of the yoke section (5),
a2 is the spacing between the opening edge (17) of the openings of the first geometry adjacent the free edge of the portion (4) and the free edge (4') or the edge line (15) of the notches (10),
a3 is the spacing between the edge region of the opening of the second geometry adjacent the free edge (4') of the portion (4) and this free edge (4') or and the edge line (15) of the notches,
B1 is the width of the openings (13) of the first geometry,
B2 is the width of the openings (14a, 14b) of the second geometry,
r1 is the radius of the rounding of the corners of the openings (13) of the first geometry and
r3 is the radius of the rounding at the transition between the first and fourth opening edge (20, 22) of the openings of the second geometry.

23. Bottle cell carrier according to one of the preceding claims 6-14, **characterised in that** with a sequence of openings (13, 14a, 14b) in the respective portion (4), at the beginning and at the end respectively of the said sequence there is an opening (14a, 14b) of the second geometry and between these said openings there are two openings (13) of the first geometry and the openings of the second geometry are disposed in a mirror-inverted manner one relative to the other, the geometry of the openings being determined by the following parameters,
| | |
|---|---|
| Spacing a1 | 22 mm |
| Spacing a2 | 10 mm |
| Width B1 | 90 mm |
| Radius r2 | 20 mm |
| Spacing a3 | 10 mm |
| Width B2 | 90 mm |
| Radius r3 | 17 mm |
| Thickness d1 | 2.6 mm |
| Thickness d2 | 3 mm |
wherein
a1 is the spacing of the respective opening edge (16, 19) of the openings adjacent the plane of the yoke section (5),
a2 is the spacing between the opening edge (17) of the openings of the first geometry adjacent the free edge of the portion (4) and the free edge (4') or the edge line (15) of the notches (10),
a3 is the spacing between the edge region of the opening of the second geometry adjacent the free edge (4') of the portion and this free edge (4') or and the edge line (15) of the notches,
B1 is the width of the openings (13) of the first geometry,
B2 is the width of the openings (14a, 14b) of the second geometry,
r1 is the radius of the rounding of the corners of the openings (13) of the first geometry and
r3 is the radius of the rounding at the transition between the first and fourth opening edge (20, 22) of the openings of the second geometry.

24. Bottle cell carrier according to one of the preceding claims 6-14,
**characterised in that** with a sequence of openings (13, 14a, 14b) in the respective portion (4), at the beginning and at the end respectively of the said sequence there is an opening (14a, 14b) of the second geometry and between these said openings there are two openings (13) of the first geometry and the openings of the second geometry are disposed in a mirror-inverted manner one relative to the other, the geometry of the openings being determined by the following parameters,
| | |
|---|---|
| Spacing a1 | 20 mm |
| Spacing a2 | 12 mm |
| Width B1 | 90 mm |
| Radius r2 | 25 mm |
| Spacing a3 | 15 mm |
| Width B2 | 90 mm |
| Radius r3 | 17 mm |
| Thickness d1 | 2.9 mm |
| Thickness d2 | 3 mm |
wherein
a1 is the spacing of the respective opening edge (16, 19) of the openings adjacent the plane of the yoke section (5),
a2 is the spacing between the opening edge (17) of the openings of the first geometry adjacent the free edge of the portion (4) and the free edge (4') or the edge line (15) of the notches (10),
a3 is the spacing between the edge region of the opening of the second geometry adjacent the free edge (4') of the portion and this free edge (4') or and the edge line (15) of the notches,
B1 is the width of the openings (13) of the first geometry,
B2 is the width of the openings (14a, 14b) of the second geometry,
r1 is the radius of the rounding of the corners of the openings (13) of the first geometry and
r3 is the radius of the rounding at the transition between the first and fourth opening edge (20, 22) of the openings of the second geometry.

25. Bottle cell carrier according to one of the preceding claims 6-14, **characterised in that** with a sequence of openings (13, 14a, 14b) in the respective portion (4), at the beginning and at the end respectively of the said sequence there is an opening (14a, 14b) of the second geometry and between these said openings there are two openings (13) of the first geometry and the openings of the second geometry are disposed in a mirror-inverted manner one relative to the other, the geometry of the openings being determined by the following parameters,
| | |
|---|---|
| Spacing a1 | 35 mm |
| Spacing a2 | 21 mm |
| Width B1 | 87 mm |
| Radius r2 | 27.5 mm |
| Spacing a3 | 40 mm |
| Width B2 | 77 mm |
| Radius r3 | 24 mm |
| Thickness d1 | 4.5 mm |
| Thickness d2 | 5 mm |
Wherein
a1 is the spacing of the respective opening edge (16, 19) of the openings adjacent the plane of the yoke section (5),
a2 is the spacing between the opening edge (17) of the openings of the first geometry adjacent the free edge of the portion (4) and the free edge (4') or the edge line (15) of the notches (10),
a3 is the spacing between the edge region of the opening of the second geometry adjacent the free edge (4') of the portion and this free edge (4') or and the edge line (15) of the notches,
B1 is the width of the openings (13) of the first geometry,
B2 is the width of the openings (14a, 14b) of the second geometry,
r1 is the radius of the rounding of the corners of the openings (13) of the first geometry and
r3 is the radius of the rounding at the transition between the first and fourth opening edge (20, 22) of the openings of the second geometry.

26. Bottle cell carrier according to one of the preceding claims, **characterised in that** the width of the cross bars (23, 24) formed between the openings (13, 14a, 14b) at the portion (4) is identical.

27. Bottle cell carrier according to one of the preceding claims, **characterised by** the production of the said bottle cell carrier from corrosion-resistant sheet metal, preferably steel plate.

28. Bottle basket for cleaning machines with a bottle cell carrier (2) and with a plurality of bottle cells (3) provided on this bottle cell carrier , **characterised in that** the bottle cell carrier (2) is configured corresponding to one of the preceding claims.

## Revendications

1. Support pour casiers à bouteilles d'un panier à bouteilles (1) pour machines à nettoyer, fabriqué sous la forme de support profilé incurvé en U réalisé dans un matériau plat comportant deux montants (4) et un segment de barre (5) raccordant ces montants (4) l'un à l'autre, segment de barre dans lequel sont prévues, dans un axe longitudinal (L) du support pour casiers à bouteilles (2), les unes à la suite des autres, des ouvertures (6) de logement de casiers à bouteilles (3) qui s'étendent dans l'espace formé entre les montants (4) avec un corps de casier à bouteille (7), les montants (4) étant munis, pour la formation d'une structure du type à grille ou à échelons, d'une multitude d'ouvertures de grand format (13, 14a, 14b) qui sont prévues les unes à la suite des autres dans le sens longitudinal L, **caractérisé en ce que** la surface totale des ouvertures (13, 14a, 14b) est supérieure à la surface restante des montants (4).

2. Support pour casiers à bouteilles selon la revendication 1, **caractérisé en ce que** la largeur (B1, B2), que présentent les ouvertures (13, 14a, 14b) en direction de l'axe longitudinal (L) du support pour casiers à bouteilles, et/ou la hauteur que présentent les ouvertures (13, 14a, 14b) dans un sens axial perpendiculairement à l'axe longitudinal (L) du support pour casiers à bouteilles (L), est sensiblement supérieure à la largeur des tiges transversales (23, 24, 25), demeurant entre les ouvertures, s'étendant transversalement ou perpendiculairement à l'axe longitudinal (L) du support pour casiers à bouteilles, et/ou à la largeur des tiges s'étendant selon l'axe longitudinal (L) du support pour casiers à bouteilles ou des zones (26, 27) au niveau de la transition vers le segment de barre (5) ou au niveau du bord (4') libre, du montant respectif (4), se trouvant à distance du segment de barre (5).

3. Support pour casiers à bouteilles selon la revendication 1 ou 2, **caractérisé en ce qu'**il est réalisé de manière symétrique par rapport à un plan médian (M) englobant l'axe longitudinal (L) du support pour casiers à bouteilles.

4. Support pour casiers à bouteilles selon l'une quelconque des revendications précédentes, **caractérisé en ce qu'**il est réalisé de manière symétrique par rapport à un plan transversal s'étendant à travers le centre du support pour casiers à bouteilles et disposé perpendiculairement à l'axe longitudinal (L) du support pour casiers à bouteilles.

5. Support pour casiers à bouteilles selon l'une quelconque des revendications précédentes, **caractérisé en ce que** les ouvertures (13, 14a, 14b) comportent des coins arrondis.

6. Support pour casiers à bouteilles selon l'une quelconque des revendications précédentes, **caractérisé en ce que**, dans les montants (4), sont prévues plusieurs ouvertures (13) d'une première géométrie et plusieurs ouvertures (14, 14b) d'une seconde géométrie.

7. Support pour casiers à bouteilles selon la revendication 6, **caractérisé en ce que** les ouvertures (13) de la première géométrie sont carrées ou rectangulaires.

8. Support pour casiers à bouteilles selon la revendication 7, **caractérisé en ce que**, dans la réalisation rectangulaire des ouvertures (13) de la première géométrie, les bords d'ouverture plus longs (18) sont orientés dans le sens axial perpendiculairement à l'axe longitudinal (L) du support pour casiers à bouteilles (L).

9. Support pour casiers à bouteilles selon l'une quelconque des revendications précédentes 6 à 8, **caractérisé en ce que** les ouvertures (14a, 14b) de la seconde géométrie sont réalisées à la manière d'un trapèze et à savoir avec trois bords d'ouverture (19, 20, 21) se rattachant les uns aux autres perpendiculairement, bords parmi lesquels un premier et un second bord d'ouverture (20, 21), formant la base ou le côté opposé à la base, s'étendent perpendiculairement à l'axe longitudinal (L) du support pour casiers à bouteilles, un troisième bord d'ouverture (19) s'étendant perpendiculairement à ces bords d'ouverture (20, 21) et formant un côté de trapèze est parallèle à l'axe longitudinal (L) du support pour casiers à bouteilles (L) et un quatrième bord d'ouverture (22), formant un côté de trapèze, englobe un angle aigu (α) avec le troisième bord d'ouverture (19), par exemple un angle d'un ordre de grandeur compris entre 20° et 25°, par exemple d'environ 24°.

10. Support pour casiers à bouteilles selon l'une quelconque des revendications précédentes 6 à 9, **caractérisé en ce que** les ouvertures (13, 14a, 14b) sur le montant respectif (4) forment au moins une suite d'ouvertures dans laquelle, dans le sens de l'axe longitudinal (L) du support pour casiers à bouteilles, dans un sens d'observation fictif (A), à une ouverture (14a) de la seconde géométrie fait suite au moins une ouverture (13) de la première géométrie et à celle-ci à nouveau une ouverture (14b) de la seconde géométrie, les ouvertures de la seconde géométrie aux deux extrémités de cette suite étant réalisées de manière géométriquement inversée par rapport à un plan de miroir fictif coupant l'axe longitudinal (L) du support pour casiers à bouteilles perpendiculairement et disposé au milieu de la suite.

11. Support pour casiers à bouteilles selon les revendications 9 et 10, **caractérisé en ce que** les deux ouvertures (14a, 14b) de la seconde géométrie sont prévues, avec leur second bord circonférentiel (21), au début ou à la fin de la suite.

12. Support pour casiers à bouteilles selon la revendication 10 ou 11, **caractérisé en ce qu'**au moins deux ouvertures (13) de la première géométrie sont prévues entre les deux ouvertures (14a, 14b) de la seconde géométrie.

13. Support pour casiers à bouteilles selon les revendications 10 à 12, **caractérisé en ce que**, dans le sens de l'axe longitudinal (L) du support pour casiers à bouteilles (L), la suite d'ouvertures est prévue plusieurs fois, une ouverture (14b) de la seconde géométrie d'une suite et une ouverture (14b) réalisée de manière géométriquement inversée de la seconde géométrie de la suite successive étant prévues au niveau de la transition entre deux suites.

14. Support pour casiers à bouteilles selon la revendication 13, **caractérisé en ce que**, au niveau de la transition entre deux suites d'ouvertures, la zone de bordure ou la tige longitudinale (27), formant le bord libre du montant respectif (4), s'étendant selon l'axe longitudinal (L) du support pour casiers à bouteilles, comporte un élargissement triangulaire (27').

15. Support pour casiers à bouteilles selon l'une quelconque des revendications précédentes, **caractérisé en ce qu'**on a prévu, à des écarts prédéfinis entre les montants (4), des tiges de raccordement (28) fabriquées dans un matériau plat qui sont orientées, avec leurs côtés superficiels sur des plans perpendiculaires à l'axe longitudinal (L) du support à casiers pour bouteilles.

16. Support pour casiers à bouteilles selon la revendication 15, **caractérisé en ce que** les tiges de raccordement (28) sont prévues au niveau de la transition entre deux suites d'ouvertures.

17. Support pour casiers à bouteilles selon la revendication 15 ou 16, **caractérisé en ce que** les tiges de raccordement (28) présentent une hauteur qui est égale ou à peu près égale à la hauteur de l'élargissement triangulaire (27').

18. Support pour casiers à bouteilles selon l'une quelconque des revendications précédentes, **caractérisé par** des éléments terminaux (31) fabriqués dans un matériau plat, orientés avec leurs côtés superficiels perpendiculairement à l'axe longitudinal (L) du support pour casiers à bouteilles, raccordant les montants (4) ainsi que le segment de barre (5), des deux côtés du support pour casiers à bouteilles.

19. Support pour casiers à bouteilles selon l'une quelconque des revendications précédentes, **caractérisé en ce que** les montants (4) sont munis, au niveau du bord libre (4'), d'encoches, de préférence d'encoches (10) ouvertes en direction du bord libre (4'), et **en ce que** les côtés fermés, tournés vers le segment de barre (5), des encoches (10) se trouvent sur le montant respectif (4) sur une ligne commune (15) parallèlement à l'axe longitudinal (L) du support pour casiers à bouteilles.

20. Support pour casiers à bouteilles selon la revendication 19, **caractérisé en ce que** les encoches (10) sont disposées entre deux tiges transversales (23, 24, 25) formées dans les montants (4) par les ouvertures (13, 14a, 14b).

21. Support pour casiers à bouteilles selon l'une quelconque des revendications précédentes, **caractérisé en ce que** les tiges transversales (23, 24, 25) formées dans les montants (4) par les ouvertures (13, 14a, 14b) sont prévues là où sont formées des tiges transversales (11) également entre les ouvertures (6) dans le segment de barre (5).

22. Support pour casiers à bouteilles selon l'une quelconque des revendications précédentes 6 à 14, **caractérisé en ce que**, dans une suite d'ouvertures (13, 14a, 14b) dans le montant respectif (4) qui présente, au début et à la fin, une ouverture (14a, 14b) de la seconde géométrie et entre celles-ci deux ouvertures (13) de la première géométrie et les ouvertures de la seconde géométrie sont disposées de manière géométriquement inversée les unes par rapport aux autres, la géométrie des ouvertures est déterminée par les paramètres ci-après :
| | |
|---|---|
| Distance a1 | 12 mm |
| Distance a2 | 7,5 mm |
| Largeur B1 | 90 mm |
| Rayon r2 | 20 mm |
| Distance a3 | 7,5 mm |
| Largeur B2 | 90 mm |
| Rayon r3 | 17 mm |
| Epaisseur d1 | 2,4 mm |
| Epaisseur d2 | 3 mm |
a1 étant la distance du bord d'ouverture respectif (16, 19), des ouvertures, le plus proche du plan du segment de barre (5),
a2 étant la distance du bord d'ouverture (17), des ouvertures de la première géométrie, le plus proche du bord libre du montant (4) par rapport au bord libre (4') ou à la ligne de bordure (15) des encoches (10),
a3 étant la distance de la zone de bordure, de l'ouverture de la seconde géométrie, la plus proche du bord libre (4') du montant (4) par rapport à ce bord libre (4') ou à la ligne de bordure (15) des encoches,
B1 étant la largeur des ouvertures (13) de la première géométrie,
B2 étant la largeur des ouvertures (14a, 14b) de la seconde géométrie,
r1 étant le rayon de l'arrondi des coins des ouvertures (13) de la première géométrie et
r3 étant le rayon de l'arrondi au niveau de la transition entre le premier et le quatrième bord d'ouverture (20, 22) des ouvertures de la seconde géométrie.

23. Support pour casiers à bouteilles selon l'une quelconque des revendications précédentes 6 à 14, **caractérisé en ce que**, dans une suite d'ouvertures (13, 14a, 14b) dans le montant respectif (4) qui présente, au début et à la fin, une ouverture (14a, 14b) de la seconde géométrie et entre celles-ci deux ouvertures (13) de la première géométrie et les ouvertures de la seconde géométrie sont disposées de manière géométriquement inversée les unes par rapport aux autres, la géométrie des ouvertures est déterminée par les paramètres ci-après :
| | |
|---|---|
| Distance a1 | 22 mm |
| Distance a2 | 10 mm |
| Largeur B1 | 90 mm |
| Rayon r2 | 20 mm |
| Distance a3 | 10 mm |
| Largeur B2 | 90 mm |
| Rayon r3 | 17 mm |
| Epaisseur d1 | 2,6 mm |
| Epaisseur d2 | 3 mm |
a1 étant la distance du bord d'ouverture respectif (16, 19), des ouvertures, le plus proche du plan du segment de barre (5),
a2 étant la distance du bord d'ouverture (17), des ouvertures de la première géométrie, le plus proche du bord libre du montant (4) par rapport au bord libre (4') ou à la ligne de bordure (15) des encoches (10),
a3 étant la distance de la zone de bordure, de l'ouverture de la seconde géométrie, la plus proche du bord libre (4') du montant (4) par rapport à ce bord libre (4') ou à la ligne de bordure (15) des encoches,
B1 étant la largeur des ouvertures (13) de la première géométrie,
B2 étant la largeur des ouvertures (14a, 14b) de la seconde géométrie,
r1 étant le rayon de l'arrondi des coins des ouvertures (13) de la première géométrie et
r3 étant le rayon de l'arrondi au niveau de la transition entre le premier et le quatrième bord d'ouverture (20, 22) des ouvertures de la seconde géométrie.

24. Support pour casiers à bouteilles selon l'une quelconque des revendications précédentes 6 à 14, **caractérisé en ce que**, dans une suite d'ouvertures (13, 14a, 14b) dans le montant respectif (4) qui présente, au début et à la fin, une ouverture (14a, 14b) de la seconde géométrie et entre celles-ci deux ouvertures (13) de la première géométrie et les ouvertures de la seconde géométrie sont disposées de manière géométriquement inversée les unes par rapport aux autres, la géométrie des ouvertures est déterminée par les paramètres ci-après :
| | |
|---|---|
| Distance a1 | 20 mm |
| Distance a2 | 12 mm |
| Largeur B1 | 90 mm |
| Rayon r2 | 25 mm |
| Distance a3 | 15 mm |
| Largeur B2 | 90 mm |
| Rayon r3 | 17 mm |
| Epaisseur d1 | 2,9 mm |
| Epaisseur d2 | 3 mm |
a1 étant la distance du bord d'ouverture respectif (16, 19), des ouvertures, le plus proche du plan du segment de barre (5),
a2 étant la distance du bord d'ouverture (17), des ouvertures de la première géométrie, le plus proche du bord libre du montant (4) par rapport au bord libre (4') ou à la ligne de bordure (15) des encoches (10),
a3 étant la distance de la zone de bordure, de l'ouverture de la seconde géométrie, la plus proche du bord libre (4') du montant (4) par rapport à ce bord libre (4') ou à la ligne de bordure (15) des encoches,
B1 étant la largeur des ouvertures (13) de la première géométrie,
B2 étant la largeur des ouvertures (14a, 14b) de la seconde géométrie,
r1 étant le rayon de l'arrondi des coins des ouvertures (13) de la première géométrie et
r3 étant le rayon de l'arrondi au niveau de la transition entre le premier et le quatrième bord d'ouverture (20, 22) des ouvertures de la seconde géométrie.

25. Support pour casiers à bouteilles selon l'une quelconque des revendications précédentes 6 à 14, **caractérisé en ce que**, dans une suite d'ouvertures (13, 14a, 14b) dans le montant respectif (4) qui présente, au début et à la fin, une ouverture (14a, 14b) de la seconde géométrie et entre celles-ci deux ouvertures (13) de la première géométrie et les ouvertures de la seconde géométrie sont disposées de manière géométriquement inversée les unes par rapport aux autres, la géométrie des ouvertures est déterminée par les paramètres ci-après :
| | |
|---|---|
| Distance a1 | 35 mm |
| Distance a2 | 21 mm |
| Largeur B1 | 87 mm |
| Rayon r2 | 27,5 mm |
| Distance a3 | 40 mm |
| Largeur B2 | 77 mm |
| Rayon r3 | 24 mm |
| Epaisseur d1 | 4,5 mm |
| Epaisseur d2 | 5 mm |
a1 étant la distance du bord d'ouverture respectif (16, 19), des ouvertures, le plus proche du plan du segment de barre (5),
a2 étant la distance du bord d'ouverture (17), des ouvertures de la première géométrie, le plus proche du bord libre du montant (4) par rapport au bord libre (4') ou à la ligne de bordure (15) des encoches (10),
a3 étant la distance de la zone de bordure, de l'ouverture de la seconde géométrie, la plus proche du bord libre (4') du montant (4) par rapport à ce bord libre (4') ou à la ligne de bordure (15) des encoches,
B1 étant la largeur des ouvertures (13) de la première géométrie,
B2 étant la largeur des ouvertures (14a, 14b) de la seconde géométrie,
r1 étant le rayon de l'arrondi des coins des ouvertures (13) de la première géométrie et
r3 étant le rayon de l'arrondi au niveau de la transition entre le premier et le quatrième bord d'ouverture (20, 22) des ouvertures de la seconde géométrie.

26. Support pour casiers à bouteilles selon l'une quelconque des revendications précédentes, **caractérisé en ce que** les tiges transversales (23, 24) formées entre les ouvertures (13, 14a, 14b) sur le montant (4) présentent la même largeur.

27. Support pour casiers à bouteilles selon l'une quelconque des revendications précédentes, **caractérisé par** sa fabrication en tôle métallique résistante à la corrosion, de préférence en tôle d'acier.

28. Panier à bouteilles pour machines à nettoyer comportant un support pour casiers à bouteilles (2) et plusieurs casiers à bouteilles (3) prévus sur ce support pour casiers à bouteilles, **caractérisé en ce que** le support pour casiers à bouteilles (2) est réalisé conformément à l'une quelconque des revendications précédentes.
